# EUROPÄISCHE PATENTSCHRIFT

(11) **EP 2 257 499 B1**
(45) Veröffentlichungstag und Bekanntmachung des Hinweises auf die Patenterteilung: **18.01.2012**
(21) Anmeldenummer: 09715103.9
(22) Anmeldetag: 19.02.2009
(51) Int. Cl.: C02F 1/76, C02F 1/68, B01D 27/08, B01D 27/10

(54) **BEHÄLTER SOWIE VORRICHTUNG UND VERFAHREN ZUR HERSTELLUNG EINER DESINFEKTIONSLÖSUNG**
CONTAINER, AND DEVICE AND METHOD FOR PRODUCING A DISINFECTING SOLUTION
RÉCIPIENT, AINSI QUE DISPOSITIF ET PROCÉDÉ POUR PRODUIRE UNE SOLUTION DÉSINFECTANTE

(30) Priorität: 27.02.2008 DE 102008011276
(43) Veröffentlichungstag der Anmeldung: 08.12.2010
(73) Patentinhaber: Siemens Aktiengesellschaft, 80333 München (DE)
(72) Erfinder: SCHNITZLER, Simon, 89346 Bibertal (DE)
(86) Internationale Anmeldenummer: PCT/EP2009/051973
(87) Internationale Veröffentlichungsnummer: WO 2009/106476

(56) Entgegenhaltungen:
- EP-A- 0 492 627
- EP-A- 1 136 110
- EP-A- 1 576 997
- WO-A-99/35078
- DE-A1- 19 507 329
- US-A- 3 607 103
- US-A- 4 842 729
- US-A- 5 251 656
- US-A- 5 447 641
- US-B1- 6 298 871

## Beschreibung

Die Erfindung betrifft einen Behälter mit einer Hypochlorit-Verbindung, insbesondere Calciumhypochlorit, gemäß dem Oberbegriff des Patentanspruchs 1. Des Weiteren betrifft die Erfindung eine Vorrichtung zum Erzeugen einer chlorhaltigen, wässrigen Desinfektionslösung, mit einem derartigen Behälter gemäß dem Oberbegriff des Patentanspruchs 18, sowie ein Verfahren zur Erzeugung einer Desinfektionslösung und Behandlung eines wässrigen Systems gemäß dem Oberbegriff des Patentanspruchs 26.

Dosiervorrichtungen zur Dosierung von Hypochlorit-Verbindungen, insbesondere in Form von Calciumhypochlorit, finden für eine Vielzahl von Desinfektionsaufgaben in wässrigen Systeme, beispielsweise bei der Trinkwasser-Aufbereitung, der Aufbereitung von Schwimm- und Badebeckenwasser, der Desinfektion von Prozess- und Brauchwasser der Industrie und CIP-Anwendungen (Clean in Place-Anwendungen), wie bspw. der Reinigung von Anlagen in Lebensmittel- und Getränkeindustrie oder von Ultrafiltrationsanlagen (UF-Anlagen), Verwendung.

Da es sich bei Calciumhypochlorit um einen Feststoff handelt, der in der Regel als trockenes Granulat vorliegt, ist es allgemein bekannt, das Calciumhypochlorit vor der Anwendung in einem Lösebehälter (Lösebehälterverfahren) zu lösen. Hierbei wird der Lösebehälter manuell mit Calciumhypochlorit-Granulat befüllt und von einem Lösewasserstrom beaufschlagt. Das Calciumhypochlorit aus der Calciumhypochlorit-Füllung geht teilweise in Lösung, so dass der Lösebehälter bis zu einem definierten Flüssigkeitsniveau mit Calciumhypochlorit-Lösung befüllt ist. Über eine Impfwasserapparatur wird die Calciumhypochlorit-Lösung anschließend aus dem Lösebehälter entnommen und in den zu desinfizierenden Wasserstrom eingebracht. Nachteilig bei dieser Lösung ist, dass bei der manuellen Befüllung des Lösebehälters mit Calciumhypochlorit eine gesundheitsgefährdende Calciumhypochlorit-Staubemission auftreten kann. Die Befüllung muss daher mit einer geeigneten Arbeitsschutzausrüstung (Atemschutz etc.) erfolgen. Ferner kann beim Befüllen des Lösebehälters mit Wasser oder dem Nachfüllen von Calciumhypochlorit-Granulat, Sediment vom Boden des Lösebehälters aufgewirbelt werden, welches nachfolgende Armaturen der Impfwasserapparatur in ihrer Funktionsfähigkeit beeinträchtigen kann. Dosierpumpen, Injektoren und Impfwasserarmaturen müssen daher regelmäßig manuell gereinigt werden. Weiterhin nachteilig ist, dass die anfallenden Löserückstände am Boden des Lösebehälters eine mit Löserückständen gemischte Calciumhypochlorit-Schüttung ausbilden, die im Lösebehälter verbleibt. Die gemischte Schüttung verhindert eine Füllstandserfassung des vorhandenen Calciumhypochlorit-Vorrats und muss in regelmäßigen Abständen, meist in die Kanalisation, ausgeschwemmt werden. Da der Inhalt des Lösebehälters, bestehend aus noch nicht gelöstem Calciumhypochlorit und der bereiteten Lösung, hierbei vollständig entsorgt wird, können relativ große Chlormengen in die Kanalisation gelangen.

Zur Automatisierung der Calciumhypochlorit-Befüllung ist aus der DE 195 07 329 A1 eine Vorrichtung zur Dosierung von Calciumhypochlorit bekannt, bei der Calciumhypochlorit-Granulat mittels einer pneumatischen Fördereinrichtung aus einer Vorratseinrichtung in den Lösebehälter gefördert wird. Partikuläre Reststoffe werden bei dieser Lösung durch Zugabe von Salzsäure gelöst (Mischerverfahren). Dadurch wird verhindert, dass die stromabwärts des Calciumhypochlorit-Lösebehälters angeordneten Dosiereinrichtungen durch partikuläre Reststoffe in ihrer Funktion beeinträchtigt werden, allerdings wird durch die Zugabe von Salzsäure die Chloridfracht in den zu desinfizierenden Wasserstrom extrem erhöht. Die Säurezugabe zur Calciumhypochlorit-Lösung kann daher zu einer Freisetzung von Chlorgas aus der Lösungseinrichtung führen. Weiterhin kann bei derartigen pneumatischen Förderanlagen, insbesondere bei Beschädigung der Filter, ebenfalls gesundheitsgefährdender Calciumhypochlorit-Staub austreten. Derartige halbautomatische Befüllanlagen mit Trockenförderern sind ferner fertigungstechnisch aufwändig und aufgrund einer Verstopfungsgefahr der Fördereinheit fehleranfällig.

Ferner ist es aus der US-Patentschrift US 4,842,729 ein Wasseraufbereitungssystem bekannt, bei dem seitlich an der das aufzubereitende Wasser führenden Wasserleitung nach Art eines T-Stücks abzweigend eine Aufnahme für einen Korb mit Wasseraufbereitungstabletten vorgesehen ist. Durch einen auf die Korbaufnahme aufschraubbaren Deckel kann der Korb gegen eine Feder vorgespannt in die Wasserleitung abgesenkt werden, oder nach Öffnen des Deckels ausgetauscht werden. Beim Austausch des Korbs ist der Bediener aber wiederum den gesundheitsgefährdenden Inhaltsstoffen der Wasseraufbereitungstabletten ausgesetzt.

Die US 5,447,641 offenbart ein Chlorzusatzgerät für die Trinkwasserbereitung von Geflügel. Das Gerät weist ein Gehäuse auf, in welchem Calciumhypochlorit in fester Form angeordnet und in Wasser gelöst wird. Das Gehäuse ist an seiner offenen Oberseite mit einem abnehmbaren Deckel verschlossen. Um das Gehäuse mit Calciumhypochlorit-Tabletten wiederzubefüllen, wird der Deckel geöffnet und die Tabletten vom Bediener eingefüllt, wobei dieser in Kontakt zum Calciumhypochlorit gelangt.

Die US 6,298,871 B1 offenbart eine Einspeiseeinheit für insbesondere Calciumhypochlorit, die ein Gefäß zur Aufnahme von Calciumhypochlorit-Tabletten umfasst. Das Gefäß wird in einen Behälter eingeführt und dieser mittels eines Schraubverschlusses geschlossen. Um das Gefäß mit Calciumhypochlorit-Tabletten wiederzubefüllen, wird der Schraubverschluss geöffnet und die Tabletten vom Bediener eingefüllt, wobei dieser in Kontakt zum Calciumhypochlorit gelangt.

Demgegenüber liegt der Erfindung die Aufgabe zugrunde, einen Behälter sowie eine Vorrichtung und ein Verfahren zum Erzeugen einer chlorhaltigen, wässrigen Desinfektionslösung zu schaffen, bei denen gegenüber herkömmlichen Lösungen eine sichere Bedienung bei minimalem vorrichtungstechnischem Aufwand ermöglicht wird.

Diese Aufgabe wird hinsichtlich des Behälters mit den Merkmalen des Patentanspruchs 1 gelöst, hinsichtlich der Vorrichtung mit den Merkmalen des Patentanspruchs 18, sowie hinsichtlich des Verfahrens mit den Merkmalen des Patentanspruchs 26.

Wie bei den bekannten Lösebehältern ist der erfindungsgemäße Behälter mit einer Hypochlorit-haltigen Befüllung zur Erzeugung einer wässrigen Lösung versehen, also einer Befüllung, die zumindest eine Hypochlorit-Verbindung, vorzugsweise Calciumhypochlorit, beispielsweise in Form von Calciumhypochlorit-Granulat enthält, und hat zumindest einen Einlassanschluss zum Anschluss an eine Wasserversorgungsleitung und zumindest einen Auslassanschluss zum Anschluss an eine Auslassleitung für eine sich aus dem von der Wasserversorgungsleitung her einströmendem Wasser und der Befüllung bildende Flüssigkeit, wobei sich die Befüllung strömungsmäßig zwischen dem Einlassanschluss und dem Auslassanschluss befindet.

Erfindungsgemäß ist der Behälter nun als eine transportierbare und im nicht angeschlossenen Zustand nach außen hin abgedichtete Wechseleinheit ausgebildet. Die vorzugsweise als Calciumhypochlorit-Schüttung ausgebildete oder eine solche enthaltende Befüllung ist bei der erfindungsgemäßen Lösung in dem auswechselbaren, nach außen hin abgedichteten Behälter aufgenommen, so dass der Anwender nicht in Kontakt mit der gesundheitsgefährdenden Hypochlorit-Verbindung kommen kann. Der Behälter dient vorzugsweise als Transportverpackung für die Calciumhypochlorit-Befüllung.

Eine Befüllung des Behälters durch den Bediener vor Ort und damit ein Kontakt des Bedieners mit dem Hypochlorit wird unterbunden. Dies wird durch die Abdichtung des Behälters erreicht, welche dem Bediener einen Zugang zur Befüllung verwehrt. Auf bekannte Verschlüsse, die ein Bediener selbständig ohne Zuhilfenahme von Werkzeugen und/oder zerstörungsfrei öffnen und wieder verschließen kann, wurde verzichtet.

Als besonders vorteilhaft hat es sich erwiesen, wenn der Behälter so ausgebildet ist, dass die bei Bildung der wässrigen Lösung verbleibenden Löserückstände und/oder Reaktionsprodukte im Wesentlichen in dem Behälter aufgenommen und nicht ausgeschwemmt werden. Die anfallenden Löserückstände, insbesondere Schlamm aus Kalk und unlöslichen Bestandteilen der Calciumhypochlorit-Befüllung, gelangen dann nicht in den zu desinfizierenden Wasserstrom. Der Behälter ermöglicht daher die Bereitung einer Calciumhypochlorit-Lösung, die weitgehend frei von partikulären Reststoffen ist, so dass die Lösung ohne Gefahr für die nachfolgenden Dosiereinrichtungen eingesetzt werden kann. Dadurch wird eine Verunreinigung von stromabwärts des Behälters angeordneten Impfwasserapparaturen verhindert. Aufgrund des Verbleibs der Löserückstände in dem auswechselbaren Behälter ist ein Kontakt mit den Rückständen durch den Benutzer ebenfalls ausgeschlossen. Der Behälter kann dann auch als Entsorgungsverpackung für die Löserückstände dienen.

Nach Verbrauch der Befüllung im Behälter kann dieser so ausgebildet sein, dass eine Wiederbefüllung generell nicht möglich ist. Dies ist beispielsweise der Fall, wenn der Behälter verschweißt oder verklebt wurde, so dass es beim Öffnen des Behälters zu dessen Zerstörung kommt.

Der Behälter ist jedoch bei einem bevorzugten Ausführungsbeispiel der Erfindung wiederbefüllbar ausgebildet. Hierzu kann der Behälter mit zumindest einer ent- und wiederversiegelbaren Wiederbefüllungsöffnung versehen sein. Der Behälter gelangt in versiegeltem Zustand zum Anwender, der diesen weder Öffnen noch Wiederbefüllen können soll. Ein erschöpfter Behälter (Lösereaktion abgeschlossen), kann gegen einen befüllten Behälter ausgetauscht werden. Die entleerten Behälter mit den bei der Reaktion gebildeten Löserückständen können dem Hersteller für eine ordnungsgemäße Entsorgung der Rückstände und einer Wiederverwertung des Behälters zugeführt werden. Eine ordnungsgemäße Entsorgung der Reststoffe durch qualifiziertes Personal mit den entsprechenden Schutzausrüstungen und Einrichtungen zum sicheren Umgang ist dadurch gewährleistet.

Eine Versiegelung eines frisch befüllten Behälters, die vom Hersteller des Behälters zum Zwecke der Wiederbefüllung, jedoch nicht vom Bediener zu öffnen sein soll, kann beispielsweise über eine Plombe, Plombierschelle, Siegelmarke, Siegeletikett oder dergleichen erfolgen. Der Bediener erkennt anhand solcher Maßnahmen unschwer, dass er nicht befugt ist, den Behälter zu öffnen.

Gemäß einem besonders bevorzugten Ausführungsbeispiel des Behälters ist der Einlassanschluss und der Auslassanschluss mit im nicht angeschlossenen Zustand abdichtenden Sperreinrichtungen, insbesondere selbstsperrenden Anschlusskupplungen versehen, die zum oder beim Anschließen entriegelbar sind. Der Behälter und insbesondere die Anschlüsse des Behälters sind vorzugsweise derart gestaltet, dass sie sich ausschließlich bei Anschluss an die Dosiervorrichtung öffnen lassen. Die Entnahme von Teilmengen aus dem Behälter ist vorzugsweise verhindert. Weiterhin verhindern die Anschlusskupplungen das Austreten von Calciumhypochlorit-Granulat aus einem befüllten Behälter und von Lösungsrückständen aus einem erschöpften Behälter. Der Behälter ist dadurch einfach und sicher auszutauschen, sobald die darin aufgenommene Calciumhypochlorit-Füllung zur Desinfektion verbraucht wurde. Die Anschlusskupplungen sind vorzugsweise verwechslungssicher ausgeführt, um Anwendungsfehler beim Einbau des Behälters in die Dosiervorrichtung zu verhindern. Transport und Lagerung der Calciumhypochlorit-haltigen Befüllung erfolgen in dem verschlossenen und versiegelten Behälter, so dass kein Calciumhypochlorithaltiger Staub und/oder Calciumhypochlorit-Granulat austreten können. Der irrtümliche Kontakt von brennbaren Materialien, wie beispielsweise Öl oder Fett, mit der Calciumhypochlorit-Füllung ist durch die abgedichteten Anschlüsse und die Versiegelung des Behälters weitgehend ausgeschlossen. Die Anschlüsse des Behälters können vorzugsweise nur mit den passenden Anschlüssen einer Aufstellungseinrichtung der Dosiervorrichtung geöffnet werden, um Anwendungsfehler auszuschließen.

Durch die verschließ- und/oder versiegelbare Ausführung des Behälters ist dieser über lange Zeit ohne Qualitätsverlust lagerfähig und kann innerhalb kürzester Zeit in einen anwendungsfähigen Zustand gebracht werden.

Der Behälter ist vorzugsweise derart ausgebildet, dass die Befüllung vor Lichteinwirkung weitgehend geschützt ist. Unverschlossene, teilentleerte Lagerbehälter für trockenes Calciumhypochlorit-Granulat, wie bei Verfahren gemäß dem Stand der Technik erforderlich, können dadurch ausgeschlossen werden.

Der Behälter ist bei einem bevorzugten Ausführungsbeispiel der Erfindung als längserstreckte Kartusche ausgeformt, wobei die Befüllung als im bestimmungsgemäßen Gebrauch stehende Säule über den ganzen durchströmten Durchmesser eingeschichtet ist. Die Kartusche hat gemäß einem bevorzugten Ausführungsbeispiel der Erfindung ein etwa zylinderförmiges Gehäuse, das eine Durchströmung ohne Totwasserzonen ermöglicht, so dass eine gleichmäßige Lösereaktion erreicht wird. Durch die Dimensionierung der Querschnittsfläche der Kartusche kann die Durchströmungsgeschwindigkeit beeinflusst werden. Je weniger turbulent die Strömung in der Kartusche ist, desto besser wird der Austrag von Löserückständen aus der Kartusche verhindert.

Als Einbaulage der Kartusche ist bevorzugt, wenn eine Längsachse der Kartusche senkrecht angeordnet ist.

Der Auslassanschluss ist vorzugsweise an der Oberseite bzw. am oberen Ende des Behälters oder der Kartusche angeordnet. Dadurch können bei der Calciumhypochlorit-Lösereaktion entstehende Gase aus dem Behälter oder der Kartusche entweichen, ohne die Calciumhypochlorit-Lösungsströmung zu beeinträchtigen.

Der Behälter oder die Kartusche sind insbesondere derart dimensioniert, dass es möglich ist, sie bei herkömmlichen Wasserleitungsdrücken, beispielsweise bis zu einem Systemdruck von etwa 16 bar, mittels einer Aufstellungseinrichtung direkt in die Wasserversorgungsleitung einzubauen. Bei direktem Einbau des Behälters oder der Kartusche in die Wasserversorgungsleitung sind die technischen Einrichtungen zur Förderung und Bereitstellung des Lösewasserstroms in Strömungsrichtung vorzugsweise vor dem Behälter oder der Kartusche angeordnet. Das Eindringen von evtl. im Störungsfall auftretenden, ungelösten Partikeln in diese Einrichtungen und die als Folge zu befürchtende Beeinträchtigung der Funktion kann so verhindert werden, wozu sicherheitshalber geeignete Rückschlagventile vorgesehen sein können.

Der Behälter oder die Kartusche sind vorzugsweise für eine Betriebslage eingerichtet, bei der die Calciumhypochlorit-Befüllung von dem Wasserstrom zumindest im Wesentlichen von unten nach oben durchströmt wird. Dadurch können sich unlösliche Bestandteile der Calciumhypochlorit-Befüllung unter dem Einfluss der Schwerkraft durch Sedimentation absetzen. Die Sedimentation erfolgt aufgrund der Lösewasserzugabe von unten kontrolliert, so dass, gegenüber einer seitlichen Einbringung, turbulente Strömungen verhindert werden. Vorzugsweise erfolgt die Durchströmung der Calciumhypochlorit-Füllung im Wesentlichen senkrecht von unten nach oben, d.h. entgegen der Schwerkraft.

Die Sedimentationsgeschwindigkeit von unlöslichen Bestandteilen der Calciumhypochlorit-Befüllung und/oder Reaktionsprodukten ist vorzugsweise höher als die Durchströmungsgeschwindigkeit der Kartusche. Vorzugsweise ist die Kartusche derart dimensioniert, dass die bei der Lösungsreaktion zwangsläufig anfallenden partikulären Reststoffe durch Sedimentation ggf. unterstützt durch Filtration in dem Behälter verbleiben und nicht in den zu desinfizierenden Wasserstrom gelangen. Im Gegensatz zum Lösebehälterverfahren sind keine Sedimentationszeiten erforderlich. Gegenüber dem Mischerverfahren muss keine Salzsäure zudosiert werden, um partikuläre Rückstände in der zu dosierenden Calciumhypochlorit-Lösung aufzulösen.

Bei einer besonders kompakten Ausführung des Behälters oder der Kartusche ist in deren Innenraum eine die Calciumhypochlorit-Befüllung durchsetzende Zuführleitung zur Lösewasserzuführung angeordnet, deren freier Endabschnitt im Bereich eines Bodenabschnitts der Kartusche mündet. Vorzugsweise erstreckt sich die Zuführleitung zumindest abschnittsweise entlang oder parallel zu einer Längsachse des Behälters, insbesondere der Kartusche. Alternativ kann die Lösewasserzufuhr über eine Zuführungsöffnung im Bereich des Bodens des Behälters, insbesondere der Kartusche erfolgen.

Zur Verbesserung der Lösewasserverteilung ist vorteilhaft ein dem Einlassanschluss strömungsmäßig nachgeordneter und der Befüllung strömungsmäßig vorgeordneter Verteiler für das Wasser vorgesehen. Der Verteiler kann beispielsweise als Spaltfilter ausgebildet und bodenseitig in dem Behälter oder der Kartusche angeordnet sein, beispielsweise am bodenseitigen Leitungsende der Zuführleitung.

Als besonders vorteilhaft hat es sich erwiesen, wenn eine sich strömungsmäßig an den Einlassanschluss anschließende und der Befüllung vorgeordnete Strömungsbremseinrichtung in dem Behälter oder der Kartusche vorgesehen ist. Die am Boden des Behälters oder der Kartusche angeordnete Strömungsbremseinrichtung dient insbesondere der zusätzlichen Verteilung des Lösewassers und als Stützschicht für die darüber eingebrachte Calciumhypochlorit-Befüllung (Calciumhypochlorit-Schüttung). Die Strömungsbremseinrichtung ist vorzugsweise als feinsandige Schüttgutschicht derart in den Behälter oder die Kartusche eingebracht, dass das freie Leitungsende der Zuführleitung innerhalb der Schicht mündet. Ferner können zusätzlich oder alternativ Füllkörper und/oder textilartige Materialien als Strömungsbremseinrichtung eingesetzt werden. Ebenfalls denkbar wäre ein feinmaschiges Drahtsieb, ein Filz, Schwamm oder ein poröses Sintermaterial als Ersatz für eine feinsandige Schüttgutschicht.

Der Hypochlorit-Befüllung, insbesondere der Calciumhypochlorit-Befüllung, sind vorzugsweise chemisch beständige Füllkörper zugesetzt. Als Füllkörper können beispielsweise Kunststoffkörper wie PVDF-Ringe (Polyvinylidenfluorid-Ringe) verwendet werden. Die Füllkörper verhindern ein unerwünschtes Verfestigen (Verbacken) der Calciumhypochlorit-Befüllung auch bei längeren Lagerzeiten des Behälters oder der Kartusche.

Der Behälter, insbesondere die Kartusche, hat vorzugsweise ferner eine strömungsmäßig an die Befüllung anschließende und dem Auslassanschluss vorgeordnete Strömungsbremseinrichtung. Diese kann beispielsweise als feinsandige Schüttgutschicht, insbesondere Sandschüttung, auf die Oberseite der Hypochlorit-Befüllung, insbesondere Calciumhypochlorit-Befüllung, aufgebracht sein, so dass die Befüllung zwischen den Strömungsbremseinrichtungen angeordnet ist. Die an die Befüllung anschließende Strömungsbremseinrichtung dient auch als Filterschicht und reduziert das Ausschwemmen von nicht löslichen Bestandteilen und Löseprodukten (Kalk etc.) aus der Befüllung. Der abzusedimentierende Anteil fester Partikel wird dadurch minimiert. Ferner können zusätzlich oder alternativ Füllkörper und/oder textilartige Materialien als Filter eingesetzt werden. Denkbar wären ein feinmaschiges Drahtsieb, ein Filz, Schwamm oder ein poröses Sintermaterial als Filterschicht.

Der Auslassanschluss des Behälters oder der Kartusche ist vorzugsweise axial beabstandet oberhalb der Befüllung, insbesondere der Calciumhypochlorit-Befüllung, und/oder der ggf. vorgesehenen Strömungsbremseinrichtung angeordnet. Dadurch wird zwischen der Befüllung und dem Auslassanschluss der Kartusche ein strömungsmäßig der Befüllung nachgeordneter und dem Auslassanschluss vorgeordneter, ungefüllter bzw. freier Sedimentationsabschnitt ausgebildet. In dem Sedimentationsabschnitt können Partikel absedimentieren, welche die Strömungsbremseinrichtung passieren konnten.

Weiterhin können Filtermittel zum Zurückhalten von unlöslichen Bestandteilen der Befüllung, insbesondere ein dem Auslassanschluss strömungsmäßig mittelbar oder unmittelbar vorgeordnetes Filterelement, vorgesehen sein.

In einer erfindungsgemäßen Vorrichtung zum Erzeugen einer chlorhaltigen, wässrigen Desinfektionslösung, wird zumindest erfindungsgemäße Behälter, insbesondere eine Calciumhypochlorit-befüllte Kartusche, eingesetzt. Die Vorrichtung ist insbesondere eine Dosiereinrichtung zum Erzeugen und Dosieren der chlorhaltigen, wässrigen Desinfektionslösung.

Gemäß einem besonders bevorzugten Ausführungsbeispiel der Erfindung ist dabei eine Aufstellungseinrichtung vorgesehen, in der der Behälter oder die Kartusche in der bestimmungsgemäßen Stellung aufgenommen ist, in der die Befüllung, insbesondere die Calciumhypochlorit-Befüllung, von dem Wasserstrom zumindest abschnittsweise von unten nach oben durchströmt ist. Die Aufstellungseinrichtung hat vorzugsweise verwechslungssichere Anschlüsse für den Behälter oder die Kartusche, um Anwendungsfehler zu vermeiden.

Bei einer bevorzugten Ausführungsform der erfindungsgemäßen Vorrichtung ist der Behälter oder die Kartusche zwischen einer stromaufwärts des Behälters oder der Kartusche vorgesehenen Lösewasserapparatur und einer stromabwärts des Behälters oder der Kartusche vorgesehenen Impfwasserapparatur angeordnet, wobei die Impfwasserapparatur zumindest eine Impfstelle zum Eindosieren einer Desinfektionslösung in Nutz- oder Trinkwasser aufweist (Impfwassereinspeisung). Der Wasserein- und/oder -auslass des Behälters oder der Kartusche ist vorzugsweise auf eine gewünschte Durchflussmenge drosselbar. Zwischen der Impfstelle und dem Behälter bzw. der Kartusche kann eine Sperreinrichtung, insbesondere ein Absperrhahn (Kugelhahn), zur Absperrung der Impfstelle angeordnet sein.

Die Lösewasserapparatur kann, beispielsweise für die Trink-, Badebecken- oder Prozesswasser-Desinfektion, mit dem Trinkwassernetz verbunden sein. Der Lösewasserdruck ist bei Anschluss an das Trinkwassernetz vorzugsweise durch ein Druckbegrenzungsventil bestimmt. Mittels einer Durchflussdrossel kann der maximal mögliche Lösewasserstrom begrenzt werden.

Bei einer insbesondere zur Schwimmbeckenwasser-Desinfektion geeigneten Dosiervorrichtung ist zumindest eine, mit einer Lösewasserquelle über eine Pumpenleitung verbundene Dosierpumpe zur Lösewasserzufuhr in den Behälter oder die Kartusche vorgesehen. Die Regelung der zumindest einen Dosierpumpe erfolgt insbesondere über eine Chlorüberschuss- und/oder eine Regelung wie in DE 198 44 179 B4 beschrieben, in Abhängigkeit der aktuellen Wasserqualität an der Impfstelle.

Als vorrichtungstechnisch besonders vorteilhaft hat es sich erwiesen, wenn zwischen der Kartusche und der Lösewasserapparatur zumindest ein in Richtung der Lösewasserapparatur schließendes Rückschlagventil angeordnet ist. Das Rückschlagventil verhindert ein Rückströmen bzw. Rückdiffundieren von Calciumhypochlorit-Lösung aus dem Behälter oder der Kartusche in die Lösewasserapparatur.

Zwischen dem Behälter, insbesondere der Kartusche, und der zumindest einen Impfstelle der Impfwasserapparatur kann ein mit einer Drucksenke verbundenes Entlastungsventil, beispielsweise ein 3-Wege-Kugelhahn, zum Abbau des Systemdrucks der Kartusche vorgesehen sein.

Die Impfstelle und/oder die Lösewasser-Entnahmestelle sind mit Schließventilen (Kugelhähnen) absperrbar. Dadurch ist ein druckloser Austausch des erschöpften Behälters oder der erschöpften Kartusche möglich.

Gemäß einem alternativen Ausführungsbeispiel der Dosiervorrichtung ist zwischen dem Behälter bzw. der Kartusche und der zumindest einen Impfstelle mindestens ein Lösungsbehälter zur Zwischenspeicherung der chlorhaltigen, wässrigen Desinfektionslösung vorgesehen.

Der erfindungsgemäßen Vorrichtung können zwei oder mehr Behälter oder Kartuschen parallel zugeordnet sein. Dadurch ist eine manuelle oder automatische Umschaltung zwischen den Behältern oder Kartuschen ohne Unterbrechung des Desinfektionsvorgangs möglich. Die Umschaltung zwischen den Behältern oder Kartuschen kann beispielsweise mittels einer Magnetventilanordnung erfolgen.

Bei einer bevorzugten erfindungsgemäßen Lösung wird der Hypochlorit-Füllstand, insbesondere der Calciumhypochlorit-Füllstand, vorzugsweise mittels einer Erfassungseinrichtung ermittelt. Beispielsweise erfolgt die Füllstandsanzeige des Hypochlorit-Füllstands mittels eines zumindest abschnittsweise transparent ausgebildeten Behälters oder einer Kartusche. Der Behälter oder die Kartusche kann mit einem Sichtfenster versehen sein, das eine Minimum-Markierung als Referenz aufweist. Der Füllstand des Behälter oder der Kartusche wird bei dieser Lösung vorzugsweise manuell oder automatisch optisch erfasst.

Alternativ oder zusätzlich kann dem Behälter oder der Kartusche ein Kapazitätssensor zur Erfassung des Füllstands oder eine Messeinrichtung zur Messung der Leitfähigkeit der die Kartusche verlassenden Hypochlorit-Lösung, insbesondere Calciumhypochlorit-Lösung, zugeordnet sein. Ein derartiges System detektiert den Kapazitätsunterschied zwischen Calciumhypochlorit-Befüllung und Flüssigkeit bzw. die Abweichungen der Leitfähigkeit und verwendet diese Werte zur Füllstandsermittlung.

Ferner kann die Hypochlorit-Füllhöhe, insbesondere die Calciumhypochlorit-Füllhöhe, mittels eines Geberelements erfasst werden (Niveauerfassung). Das Geberelement, beispielsweise ein Sinker mit Magnetkern, kann auf die Filterschicht (Sandschüttung) innerhalb der Kartusche aufgelegt und von außen mittels einem Sensor (bspw. einem Reedkontakt) zur Füllhöhenermittlung detektiert werden.

Die Ausgangschlorkonzentration am Auslassanschluss wird bei einem Ausführungsbeispiel der Erfindung zur Ermittlung des Füllstands der Befüllung, insbesondere Calciumhypochlorit-Befüllung, verwendet. Wenn die Befüllung, insbesondere das Calciumhypochlorit, nahezu komplett gelöst ist, sinkt die Ausgangschlorkonzentration des Behälters/der Kartusche ab. Um den Chlorwert im zu desinfizierenden Wasserstrom zu halten, muss am Ende der Standzeit des Behälters/der Kartusche mehr dosiert werden. Der sogenannte Y-Out Wert, d.h. die Stellgröße, steigt an und kann bei entsprechender Auswertung als Indikator für einen leeren Behälter oder eine leere Kartusche verwendet werden.

Gemäß einem alternativen Ausführungsbeispiel wird die verbliebene Füllmenge an Befüllung, insbesondere die Calciumhypochlorit-Füllmenge, des Behälters/der Kartusche über das entnommene Lösewasservolumen, vorzugsweise mittels eines Ovalradzählers, ermittelt. Abhängig von der ursprünglichen Füllmenge ergibt sich eine maximal mögliche Entnahmemenge, von der auf den aktuellen Füllstand geschlossen werden kann. Eine Waageanordnung kann ebenfalls zur Ermittlung des Gewichts des Behälters/der Kartusche und damit zur Ermittlung der Füllmenge der Befüllung, insbesondere der Calciumhypochlorit-Füllung, verwendet werden. Mittels der Waage wird das aktuelle Gewicht des Behälters/der Kartusche erfasst und damit die verbliebene Füllmenge berechnet.

Der Zeitpunkt zum Austausch des Behälters/der Kartusche wird dem Benutzer vorzugsweise optisch und/oder akustisch angezeigt.

Bei einem erfindungsgemäßen Verfahren zur Behandlung eines wässrigen Systems mit einer chlorhaltigen, wässrigen Desinfektionslösung, wird der erfindungsgemäße Behälter, insbesondere die Calciumhypochlorit-befüllte Kartusche, in eine Aufstellungseinrichtung eingesetzt. Anschließend wird die Befüllung, insbesondere die Calciumhypochlorit-Befüllung, mit einem Lösewasserstrom zum Erzeugen der chlorhaltigen, wässrigen Desinfektionslösung versetzt und die Desinfektionslösung in das zu behandelnde wässrige System eingeleitet.

Die bei Bildung der Desinfektionslösung verbleibenden Löserückstände und/oder Reaktionsprodukte werden vorzugsweise im Wesentlichen von dem Behälter/der Kartusche aufgenommen.

Als besonders vorteilhaft hat es sich erwiesen, wenn der Behälter/die Kartusche nach deren Entleerung aus der Vorrichtung entfernt und einem Wiederverwertungssystem zugeführt wird. Insbesondere wird eine erschöpfter Behälter oder eine erschöpfte Kartusche zum Hersteller zurückgesendet, der den darin enthaltenen Reststoff sicher und ordnungsgemäß entsorgt. Gegenüber dem Stand der Technik werden die unlöslichen, chlorhaltigen Reststoffe nicht vor Ort in die Kanalisation verklappt, sondern beim Hersteller oder Wiederverwerter einer ordnungsgemäßen Entsorgung zugeführt. Der Behälter oder die Kartusche wird dort nach der Entleerung gereinigt, getrocknet, geprüft, mit als Feststoff vorliegendem Hypochlorit, insbesondere Calciumhypochlorit-Granulat, neu befüllt, verschlossen und versiegelt. Ein in den Behälter/die Kartusche neu eingefülltes trockenes Calciumhypochlorit-Granulat ist in der verschlossenen und/oder versiegelten Kartusche nahezu unbeschränkt lagerfähig und kurzfristig einsetzbar. Daher eignet sich der Behälter/die Kartusche auch für Stand-By und/oder Notfall-Desinfektionsaufgaben.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
- Figur 1: ein Schaltschema eines Ausführungsbeispiels einer Dosiervorrichtung mit einem erfindungsgemäßen Behälter mit Calciumhypochlorit-Befüllung;
- Figur 2: ein Schaltschema eines Ausführungsbeispiels einer mit dem Trinkwassernetz verbundenen Dosiervorrichtung;
- Figur 3: ein Schaltschema eines Ausführungsbeispiels einer Dosiervorrichtung mit einem Lösungsbehälter und
- Figur 4: ein Ablaufdiagramm einer beispielhaften Logistikkette eines erfindungsgemäßen Behälters mit Calciumhypochlorit-Befüllung.

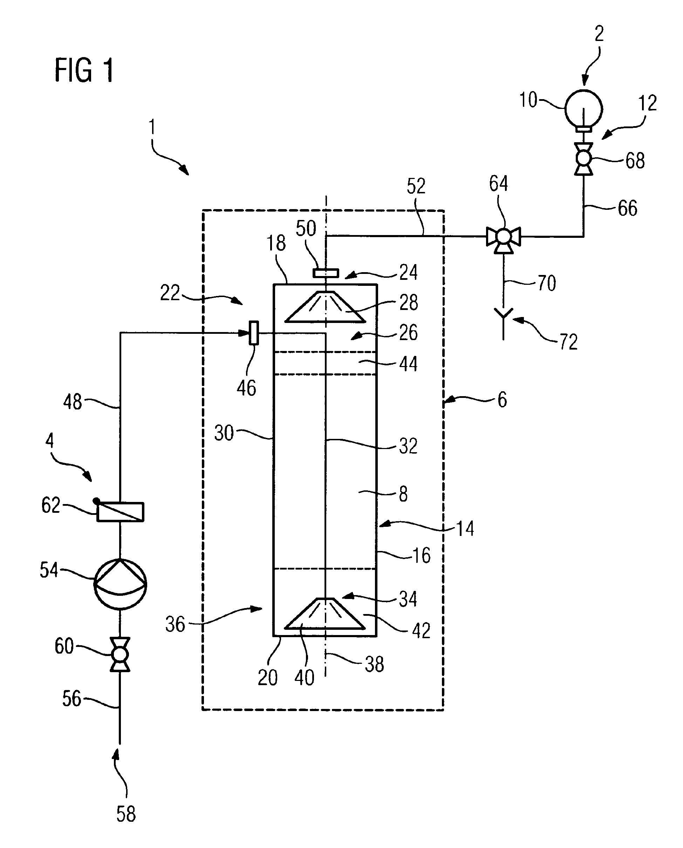

Anhand Figur 1 wird zunächst ein erstes Ausführungsbeispiel einer erfindungsgemäßen, als Dosiervorrichtung 1 ausgebildeten Vorrichtung erläutert, die beispielsweise zur Schwimmbeckenwasser-Desinfektion verwendet wird.

Figur 1 zeigt ein Schaltschema einer Dosiervorrichtung 1 zur Dosierung von Calciumhypochlorit in ein wässriges System 2, beispielsweise in ein Schwimmbecken. Die Dosiervorrichtung 1 verwendet eine Lösewasserapparatur 4 zur Bereitstellung von Lösewasser für einen Behälter 14. Der Behälter 14 ist in einer Aufstellungseinrichtung 6 angeordnet und weist eine Calciumhypochlorit-Befüllung 8 auf, die mit einem Lösewasserstrom unter Bildung einer Calciumhypochlorit-Lösung versetzbar ist. Die Calciumhypochlorit-Lösung ist mittels einer Impfstelle 10 einer Impfwasserapparatur 12 in das zu behandelnde wässrige System 2 dosierbar. Der Calciumhypochlorit-Behälter 14 ist als eine transportierbare und im nicht angeschlossenen Zustand nach außen hin abgedichtete Wechseleinheit ausgebildet, so dass der Anwender nicht in Kontakt mit dem gesundheitsgefährdenden Calciumhypochlorit kommen kann.

Bei dem dargestellten Ausführungsbeispiel der Erfindung ist der Calciumhypochlorit-Behälter 14 als längserstreckte, zylinderförmige Kartusche 16 ausgebildet, wobei die Calciumhypochlorit-Befüllung 8 als stehende Säule über den ganzen durchströmten Durchmesser eingeschichtet ist. An den Endabschnitten ist die Kartusche 16 jeweils über eine Verschlusskappe 18, 20 verschlossen, wobei die in Figur 1 untere Verschlusskappe 20 einen Boden der Kartusche 16 ausbildet. Die Kartusche 16 ist zwischen der stromaufwärts der Kartusche vorgesehenen Lösewasserapparatur 4 sowie der stromabwärts vorgesehenen Impfwasserapparatur 12 angeordnet und hat einen Lösewassereingang 22 für den Lösewasserstrom und einen Lösungsausgang 24 für die Calciumhypochlorit-Lösung. Der Lösewassereingang 22 ist etwa rechtwinklig zu dem an der oberen Verschlusskappe 18 der Kartusche 16 vorgesehenen Lösungsausgang 24 an einer Außenumfangsfläche 30 der Kartusche 16 angeordnet. Der Lösungsausgang 24 ist mit einem als Spaltfilter 28 ausgebildeten Filtermittel verbunden, der in einem Sedimentationsabschnitt 26 der Kartusche 16 angeordnet ist. Innerhalb der Kartusche 16 ist eine die Calciumhypochlorit-Befüllung 8 durchsetzende Zuführleitung 32 angeordnet, die mit dem Lösewassereingang 22 verbunden ist. Ein freier Endabschnitt 34 der Zuführleitung 32 mündet im Bereich eines Bodenabschnitts 36 der Kartusche 16, so dass der Calciumhypochlorit-Füllung 8 mittels der Leitung 32 von unten Lösewasser zuführbar ist. Die Zuführleitung 32 verläuft abschnittsweise entlang einer Längsachse 38 der Kartusche 16, wobei am bodenseitigen Leitungsende 34 der Zuführleitung 32 ein Verteiler 40 zur gleichmäßigen Verteilung des Lösewassers angeordnet ist. Der Verteiler 40 ist bei dem dargestellten Ausführungsbeispiel als Spaltfilter ausgebildet. Im Bereich des bodenseitigen Leitungsendes 34 der Zuführleitung 32 ist eine als Sandschüttung 42 ausgebildete Strömungsbremseinrichtung (Verteileinrichtung) in die Kartusche 16 eingebracht. Die Sandschüttung 42 dient insbesondere der zusätzlichen Verteilung des Lösewassers und als Stützschicht für die darüber eingebrachte Calciumhypochlorit-Befüllung 8.

Die Calciumhypochlorit-Befüllung 8 wird zur Bildung der Calciumhypochlorit-Lösung von dem Wasserstrom der Lösewasserapparatur von unten nach oben durchströmt. Dadurch können sich unlöslich Bestandteile der Calciumhypochlorit-Befüllung 8 unter dem Einfluss der Schwerkraft durch Sedimentation absetzen. Hierbei ist eine relativ geringe Durchströmgeschwindigkeit der Kartusche 16 vorteilhaft. Die Calciumhypochlorit-Befüllung 8 ist bei dem dargestellten Ausführungsbeispiel der Erfindung als trockenes Granulat in die Kartusche 16 eingebracht, wobei der Calciumhypochlorit-Schüttung 8 chemisch beständige Füllkörper in Form von PVDF-Ringen zugesetzt sind. Die Füllkörper verhindern, auch bei längeren Lagerzeiten der Kartusche 16, ein unerwünschtes Verfestigen der Calciumhypochlorit-Befüllung.

Zwischen der Calciumhypochlorit-Befüllung 8 und dem Lösungsausgang 24 ist eine als Sandschüttung 44 ausgebildete Strömungsbremseinrichtung (Filterschicht) auf die Calciumhypochlorit-Befüllung 8 aufgebracht, so dass die Füllung zwischen den Sandschichten 42, 44 angeordnet ist. Die Sandschicht 44 reduziert das Ausschwemmen von nicht löslichen Bestandteilen und Löseprodukten aus der Calciumhypochlorit-Befüllung 8. Ferner können Füllkörper und/oder textilartige Materialien als Filter eingesetzt werden.

Der Lösewassereingang 22 ist über einen selbstsperrenden Einlassanschluss 46 der Kartusche 16 und eine Lösewasserleitung 48 mit der Lösewasserapparatur 4 lösbar verbunden. Entsprechend ist der Lösungsausgang 24 mittels einem selbstsperrenden Auslassanschluss 50 der Kartusche 16 und einer Auslassleitung 52 lösbar mit der Impfwasserapparatur 12 verbunden. Einlassanschluss 46 und Auslassanschluss 50 sind Verwechslungssicher ausgeführt, um Bedienungsfehler beim Ein- und Ausbau der Kartusche 16 auszuschließen. Das Lösewasser nimmt während der Passage durch die Calciumhypochlorit-Schüttung 8 eine bestimmte und relativ stabile Chlorkonzentration an und verlässt durch den Spaltfilter 28 und die einfach zu lösende, selbstsperrende Kupplung 50 die Kartusche 16.

Bei dem dargestellten Ausführungsbeispiel der Erfindung weist die Lösewasserapparatur 4 zur Lösewasserzufuhr in die Kartusche 16 eine Dosierpumpe 54 auf, deren Eingangsanschluss über eine Pumpenleitung 56 mit einer Lösewasserquelle 58 verbunden ist. Die Regelung der Dosierpumpe 54 erfolgt über eine Chlorüberschuss- und/oder eine Regelung wie in DE 198 44 179 B4 beschrieben, in Abhängigkeit der aktuellen Wasserqualität an der Impfstelle 10. Die Verbindung zwischen der Dosierpumpe 54 und der Lösewasserquelle 58 ist mittels einem als Kugelhahn 60 ausgebildetes Schließventil absperrbar. Zwischen der Kartusche 16 und der Dosierpumpe 54 ist ein in Richtung der Dosierpumpe 54 sperrendes Rückschlagventil 62 angeordnet. Das Rückschlagventil 62 verhindert ein Rückströmen bzw. Rückdiffundieren von Calciumhypochlorit-Lösung in die Dosierpumpe 54.

Die Impfwasserapparatur 12 hat ein als 3/3-Wege-Kugelventil 64 (Kugelhahn) ausgebildetes Entlastungsventil dessen erster Anschluss über die Auslassleitung 52 mit dem Auslassanschluss 50 der Kartusche 16 verbunden ist. Ein zweiter Anschluss des 3/3-Wege-Kugelventils 64 ist über eine Impfwasserleitung 66 und ein dieser zugeordnetes Schließventil 68 (Kugelhahn) mit der Impfstelle 10 verbindbar. Ein dritter Anschluss des 3/3-Wege-Kugelventils 64 ist über eine Rücklaufleitung 70 mit einem Kanalisationsanschluss 72 verbunden. In einer Arbeitsposition des Kugelventils 64 ist der Auslassanschluss 24 der Kartusche 16 mit der Impfstelle 10 verbunden, so dass diese mit Calciumhypochlorit-Lösung versorgt wird. Der Rücklaufanschluss 70 ist gesperrt. Zum Auswechseln der entleerten Kartusche 16 ist in einer weiteren Arbeitsposition des Kugelventils 64 die Verbindung von der Kartusche 16 über die Auslassleitung 52 zu der Rücklaufleitung 70 aufgesteuert, so dass der Druck in der Kartusche 16 abgebaut wird. Die Kartusche 16 ist dann druckentlastet und kann nun gewechselt werden. Die Verbindung zwischen der Impfstelle 10 und dem Auslassanschluss 24 ist gesperrt. Dadurch ist ein druckloser Austausch der erschöpften Kartusche 16 möglich.

Der Calciumhypochlorit-Füllstand wird mittels einer nicht dargestellten Erfassungseinrichtung ermittelt. Die Füllstandsanzeige erfolgt beispielsweise mittels einer transparenten Ausbildung der Kartusche 16. Der Füllstand der Calciumhypochlorit-Füllung 8 wird bei dieser Lösung manuell optisch erfasst. Hierzu ist eine nicht dargestellte Minimum-Markierung an der Kartusche 16 vorgesehen.

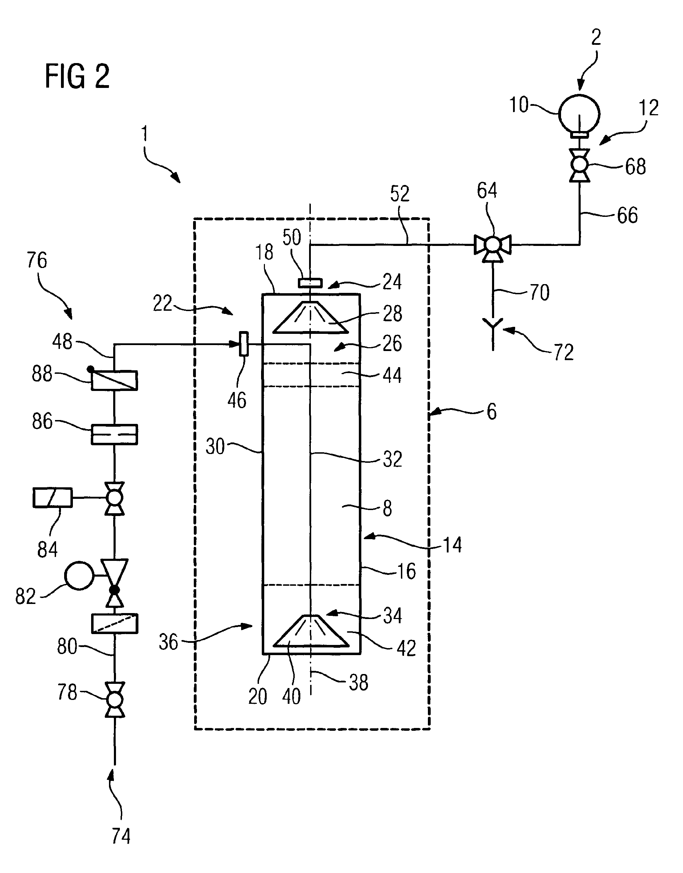

Figur 2 zeigt ein Ausführungsbeispiel einer Dosiervorrichtung 1, die beispielsweise zur Trink-, Badebecken- oder Prozesswasser-Desinfektion verwendet wird. Dieses Ausführungsbeispiel unterscheidet sich von dem vorbeschriebenen Ausführungsbeispiel im Wesentlichen durch eine zum Anschluss an ein Trinkwassernetz 74 vorgesehene Lösewasserapparatur 76. Über einen Absperrkugelhahn 78 ist die Kartusche 16 mit einer Druckleitung 80 des Trinkwassernetzes verbunden, wobei eine nicht dargestellte Trenneinrichtung (vgl. Rohrtrenner) vorgesehen ist. Der Lösewasserdruck ist durch ein Druckreduzierventil 82 bestimmt. Mittels des Druckreduzierventils 82 wird der maximal mögliche Lösewasserdruck begrenzt. Zur Regelung des Lösewasserstroms ist stromabwärts des Druckreduzierventils 82 ein als stetig verstellbares Proportionalventil 84 ausgebildetes Magnetventil vorgesehen. Dadurch ist es möglich, den Impfwasserstrom der Dosiervorrichtung 1 an unterschiedliche Desinfektionsanforderungen anzupassen, um eine optimale Desinfektionswirkung zu erzielen. Stromabwärts des Proportionalventils 84 ist eine Durchflussdrossel 86 vorgesehen. Mittels der Durchflussdrossel 86 wird der maximal mögliche Lösewasserstrom eingestellt. Zwischen der Kartusche 16 und der Durchflussdrossel 86 ist ein in Richtung der Durchflussdrossel 86 sperrendes Rückschlagventil 88 angeordnet.

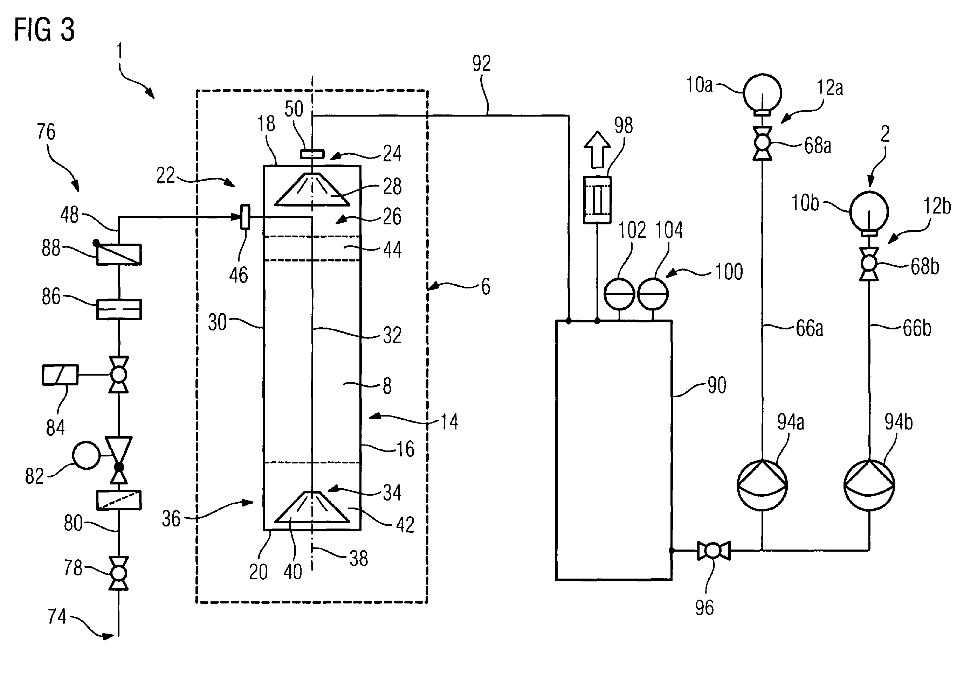

Bei einem in Figur 3 dargestellten Ausführungsbeispiel einer erfindungsgemäßen Dosiervorrichtung 1 ist, im Unterschied zu der in Figur 2 dargestellten Dosiervorrichtung, zwischen der Kartusche 16 und zwei parallel angeordneten Impfstellen 10a, 10b ein Lösungsbehälter 90 zur Zwischenspeicherung der Calciumhypochlorit-Lösung vorgesehen. Der Lösungsausgang 24 der Kartusche 16 ist über eine Auslassleitung 92 mit der Oberseite des Lösungsbehälters 90 verbunden. Die Calciumhypochlorit-Lösung wird bei diesem Ausführungsbeispiel jeweils mittels einer Dosierpumpe 94a, 94b über einen Absperrkugelhahn 96 aus dem Lösungsbehälter 90 entnommen, den zugeordneten Impfstelle 10a, 10b zugeführt und in einen oder mehrere zu desinfizierende Wasserströme dosiert. Der Lösungsbehälter 90 ist über einen Filter 98, beispielsweise einen Aktivkohlefilter entlüftet (Drucklose-Anwendung). Die Kartusche 16 ist dadurch drucklos und kann nach der Entleerung gefahrlos ausgetauscht werden. Das Proportionalventil 84 wird bei dieser Lösung über ein Ausgangssignal einer Niveauerfassungseinrichtung 100 am Lösungsbehälter 90 angesteuert. In Abhängigkeit eines Minimal-Levels 102 und eines Maximal-Levels 104, wird das Ventil 84 geöffnet oder geschlossen und gibt den Lösewasserstrom frei bzw. unterbricht ihn. Dadurch steht im Lösungsbehälter 90 stetig die gewünschte Menge der Calciumhypochlorit-Lösung für Desinfektionsaufgaben zur Verfügung.

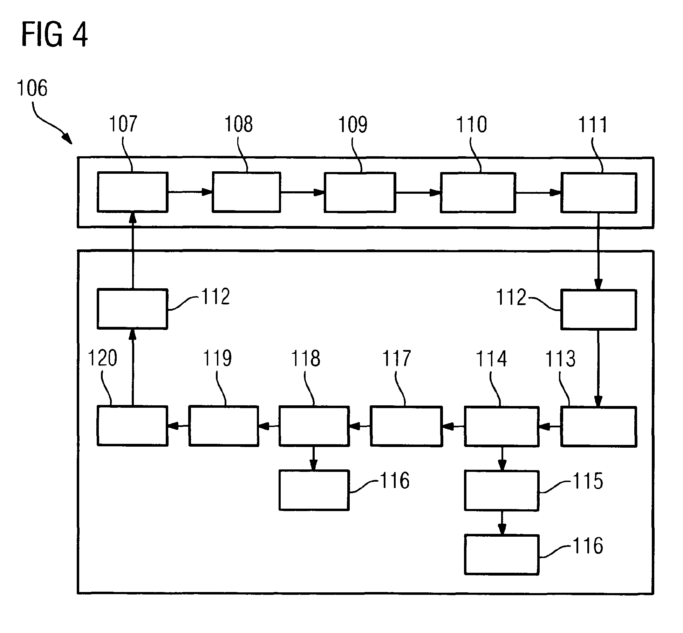

Wie Figur 4 zu entnehmen ist, die ein Ablaufdiagramm der Logistikkette einer erfindungsgemäßen Kartusche 16 zeigt, wird diese nach Gebrauch einem Wiederverwertungssystem 106 zugeführt.

Zur Behandlung eines wässrigen Systems wird die auswechselbare und mit einer Calciumhypochlorit-Befüllung versehene Kartusche 16 in eine Dosiervorrichtung gemäß der Figuren 1 bis 3 eingesetzt (Schritt 108). Anschließend wird die Calciumhypochlorit-Befüllung 8 mit einem Lösewasserstrom versetzt und die gebildete Calciumhypochlorit-Lösung in das zu behandelnde wässrige System 2 eingeleitet, wobei die bei Bildung der Lösung verbleibenden Löserückstände im Wesentlichen innerhalb der Kartusche 16 aufgenommen werden (Schritt 109). Die Kartusche 16 wird nach deren Entleerung aus der Dosiervorrichtung 1 entfernt (Schritt 110), und von dem Kunden der Wiederverwertung zugeführt (Schritt 111).

Die verbrauchte Kartusche 16 wird zum Hersteller/Verwerter transportiert (Schritt 112) und einer Eingangsprüfung (Schritt 113) unterzogen. Anschließend wird die Kartusche 16 entleert (Schritt 114). Die Löserückstände werden ordnungsgemäß entsorgt (Schritt 115), ebenso ausgemusterte Kartuschen 16, (Schritt 116). Die recyclingfähigen Kartuschen 16 werden von Löserückständen gereinigt und getrocknet (Schritt 117) und einer Prüfung (Schritt 118) zugeführt, wobei wiederum nicht recyclingfähige Kartuschen 16 entsorgt werden (Schritt 116). Weiterverwendbare Kartuschen werden mit Calciumhypochlorit-Granulat 8 wiederbefüllt und versiegelt (Schritt 119) und vom Hersteller/Verwerter eingelagert (Schritt 120). Die wiederbefüllten Kartuschen 16 können anschließend zum Kunden transportiert werden (Schritt 112). Das in die Kartusche 16 neu eingefüllte trockene Calciumhypochlorit-Granulat 8 ist in der verschlossenen und versiegelten Kartusche 16 nahezu unbeschränkt beim Kunden lagerfähig (Schritt 107) und kurzfristig einsetzbar.

Die Dosiervorrichtung 1 ist nicht auf die dargestellten Ausführungsbeispiele mit lediglich einer Kartusche 14 beschränkt, vielmehr kann die Dosiervorrichtung zwei oder mehr parallel angeordnete Kartuschen 16 aufweisen.

Offenbart ist ein Behälter 14 mit einer Befüllung 8, die zumindest eine Hypochlorit-Verbindung, insbesondere eine Calciumhypochlorit-Verbindung, zur Erzeugung einer wässrigen Lösung aufweist, und mit zumindest einem Einlassanschluss 46 zum Anschluss an eine Wasserversorgungsleitung 48 und mindestens einem Auslassanschluss 50 zum Anschluss an eine Auslassleitung 52, 92 für eine sich aus einströmendem Wasser und der Befüllung 8 bildende Flüssigkeit, wobei sich die Befüllung 8 strömungsmäßig zwischen dem Einlassanschluss 46 und dem Auslassanschluss 50 befindet und der Behälter 14 als eine transportierbare und im nicht angeschlossenen Zustand nach außen hin abgedichtete Wechseleinheit ausgebildet ist. Weiterhin offenbart sind eine Vorrichtung zum Erzeugen einer chlorhaltigen, wässrigen Desinfektionslösung sowie ein Verfahren zur Erzeugung einer derartigen Desinfektionslösung und Behandlung eines wässrigen Systems.

Obwohl die Erfindung im Wesentlichen für einen Behälter mit einer Befüllung aus Calciumhypochlorit näher erläutert wurde, ist es für einen Fachmann offensichtlich, dass anstelle von Calciumhypochlorit auch andere als Feststoff vorliegende Hypochlorit-Verbindungen, wie beispielsweise Kaliumhypochlorit usw., sowie Mischungen aus unterschiedlichen Hypochlorit-Verbindungen als Befüllung einsetzbar sind.

## Patentansprüche

1. Behälter (14) mit einer Befüllung (8), die zumindest eine Hypochlorit-Verbindung, insbesondere eine Calciumhypochlorit-Verbindung, zur Erzeugung einer chlorhaltigen, wässrigen Lösung enthält, und mit zumindest einem Einlassanschluss (46) zum Anschluss an eine Wasserversorgungsleitung (48) und zumindest einem Auslassanschluss (50) zum Anschluss an eine Auslassleitung (52, 92) für die sich aus einströmendem Wasser und einem Teil der Befüllung (8) bildende Lösung, wobei sich die Befüllung (8) strömungsmäßig zwischen dem Einlassanschluss (46) und dem Auslassanschluss (50) befindet, wobei der Behälter (14) als eine transportierbare und im nicht angeschlossenen Zustand nach außen hin abgedichtete Wechseleinheit ausgebildet ist,
**dadurch gekennzeichnet, dass** der Einlassanschluss (46) und der Auslassanschluss (50) mit im nicht angeschlossenen Zustand selbstsperrenden Anschlusskupplungen versehen sind, die zum oder beim Anschließen entriegelbar sind, dass der Behälter (14) für eine solche Betriebslage eingerichtet ist, dass die Befüllung (8) im Wesentlichen von unten nach oben durchströmbar ist, dass der Behälter als längserstreckte Kartusche (16) ausgeformt ist und die Befüllung (8) als stehende Säule über den ganzen durchströmten Durchmesser der Kartusche (16) eingeschichtet ist, und dass zum Zurückhalten und Aufnehmen von partikulären Löserückständen und/oder Reaktionsprodukten im Behälter (14) zumindest ein Filtermittel (28) vorhanden ist.

2. Behälter nach Anspruch 1,
**dadurch gekennzeichnet, dass** der Behälter wiederbefüllbar ausgebildet ist.

3. Behälter nach Anspruch 2,
**dadurch gekennzeichnet, dass** zumindest eine ent- und wiederversiegelbare Wiederbefüllungsöffnung vorgesehen ist.

4. Behälter nach einem der vorhergehenden Ansprüche,
**dadurch gekennzeichnet, dass** dieser derart ausgebildet ist, dass eine Sedimentationsgeschwindigkeit der partikulären Lösungsrückständeund/oder Reaktionsprodukte höher als eine Durchströmungsgeschwindigkeit ist.

5. Behälter nach einem der vorhergehenden Ansprüche,
**dadurch gekennzeichnet, dass** zumindest eine die Befüllung (8) durchsetzende und im Bereich eines Bodenabschnitts (36) des Behälters (14) mündende Zuführleitung (32) vorgesehen ist.

6. Behälter nach Anspruch 5,
**dadurch gekennzeichnet, dass** sich die Zuführleitung (32) zumindest abschnittsweise entlang und/oder parallel zu einer Längsachse (38) des Behälters (14) erstreckt.

7. Behälter nach einem der vorhergehenden Ansprüche,
**dadurch gekennzeichnet, dass** zumindest ein dem Einlassanschluss (46) strömungsmäßig nachgeordneter und der Befüllung (8) strömungsmäßig vorgeordneter Verteiler (40) für Wasser vorgesehen ist.

8. Behälter nach Anspruch 7,
**dadurch gekennzeichnet, dass** der Verteiler (40) an einem bodenseitigen Leitungsende (34) der Zuführleitung (32) angeordnet ist.

9. Behälter nach einem der vorhergehenden Ansprüche,
**dadurch gekennzeichnet, dass** die Befüllung (8) ein mit unlöslichen Füllkörpern vermischte, die Hypochlorit-Verbindung enthaltendes Schüttgut ist.

10. Behälter nach einem der vorhergehenden Ansprüche,
**gekennzeichnet durch** zumindest eine strömungsmäßig an den Einlassanschluss (46) anschließende und der Befüllung (8) vorgeordnete Strömungsbremseinrichtung (42).

11. Behälter nach einem der vorhergehenden Ansprüche,
**gekennzeichnet durch** zumindest eine strömungsmäßig an die Befüllung (8) anschließende und dem Auslassanschluss (50) vorgeordnete Strömungsbremseinrichtung (44).

12. Behälter nach Anspruch 10 oder Anspruch 11,
**dadurch gekennzeichnet, dass** die Strömungsbremseinrichtung (42, 44) durch eine feinsandige Schüttgutschicht gebildet ist.

13. Behälter nach einem der vorhergehenden Ansprüche,
**gekennzeichnet durch** einen strömungsmäßig der Befüllung (8) nachgeordneten und dem Auslassanschluss (50) vörgeordneten, ungefüllten Sedimentatidnsabschnitt (26).

14. Behälter nach einem der vorhergehenden Ansprüche,
**dadurch gekennzeichnet**, das das zumindest eine Filtermittel (28) dem Aüslassanschluss (50) strömungsmäßig unmittelbar vorgeordnet ist.

15. Behälter nach einem der vorhergehenden Ansprüche,
**dadurch gekennzeichnet, dass** ein Wasserein- und/oder auslass auf eine gewünschte Durchflussmenge drosselbar ist.

16. Behälter nach einem der vorhergehenden Ansprüche,
**dadurch gekennzeichnet, dass** dieser bei herkömmlichen Wasserleitungsdrücken druckfest ist, insbesondere bis zu 16 bar druckfest ist.

17. Behälter nach einem der vorhergehenden Ansprüche,
**dadurch gekennzeichnet, dass** er eine Erfassungseinrichtung, vorzugsweise einen Geber, zur Messung eines Befüllungs-Füllstands aufweist.

18. Vorrichtung zum Erzeugen einer chlorhaltigen, wässrigen Desinfektionslösung, umfassend zumindest einen Behälter (14) nach einem der vorhergehenden Ansprüche.

19. Vorrichtung nach Anspruch 18,
gekennzeichnet weiterhin durch eine Aufstellungseinrichtung (6), in der der Behälter (14) derart aufgenommen ist, dass die Befüllung (8) von dem Wasserstrom zumindest abschnittsweise von unten nach oben durchströmt ist.

20. Vorrichtung nach Anspruch 19,
**dadurch gekennzeichnet, dass** die Aufstellungseinrichtung (6) verwechslungssichere Anschlüsse für den Behälter (14) aufweist.

21. Vorrichtung nach einem der Ansprüche 18 bis 20,
**dadurch gekennzeichnet, dass** der Behälter (14) zwischen einer stromaufwärts des Behälters (14) vorgesehenen Lösewasserapparatur (4) und einer stromabwärts vorgesehenen Impfwasserapparatur (12), die zumindest eine Impfstelle (10) zum Eindosieren der Desinfektionslösung in Nutz- oder Trinkwasser aufweist, angeordnet ist.

22. Vorrichtung nach Anspruch 21,
**dadurch gekennzeichnet, dass** die Lösewasserapparatur (4) zumindest eine mit einer Lösewasserquelle (58) verbundene Dosierpumpe (54) für eine Lösewasserzufuhr zum Behälter (14) aufweist.

23. Vorrichtung nach einem der Ansprüche 21 oder 22,
**dadurch gekennzeichnet, dass** zwischen dem Behälter (14) und der Lösewasserapparatur (4) zumindest ein in Richtung der Lösewasserapparatur (4) sperrendes Rückschlagventil (62) angeordnet ist.

24. Vorrichtung nach einem der Ansprüche 21 bis 23,
**dadurch gekennzeichnet, dass** zwischen dem Behälter (14) und der zumindest einen Impfstelle (10) ein mit einer Drucksenke (72) verbundenes Entlastungsventil (64) vorgesehen ist.

25. Vorrichtung nach einem der Ansprüche 21 bis 24,
**dadurch gekennzeichnet, dass** zwischen dem Behälter (14) und der zumindest einen Impfstelle (10) mindestens ein Lösungsbehälter (90) zur Zwischenspeicherung der chlorhaltigen, wässrigen Desinfektionslösung vorgesehen ist.

26. Verfahren zur Erzeugung einer chlorhaltigen, wässrigen Desinfektionslösung und Behandlung eines wässrigen Systems (2), mit den Schritten:
a) Einsetzen zumindest eines Behälters (14) nach einem der Ansprüche 1 bis 17 in eine Aufstellungseinrichtung (6);
b) Versetzen der Befüllung (8) des Behälters (14) mit einem Lösewasserstrom zum Erzeugen der Desinfektionslösung; und
c) Einleiten der Desinfektionslösung in das zu behandelnde wässrige System (2).

27. Verfahren nach Anspruch 26,
**dadurch gekennzeichnet, dass** der Behälter (14) nach Verbrauch der Befüllung (8) aus der Aufstellungseinrichtung (6) entnommen und einem Wiederverwertungssystem (106) zugeführt wird.

28. Verfahren nach Anspruch 26 oder 27,
**dadurch gekennzeichnet, dass** ein Füllstand der Befüllung (8) überdacht wird.

## Claims

1. Container (14) having a charge (8) which contains at least one hypochlorite compound, in particular one calcium hypochlorite compound, for generating a chlorine-containing, aqueous solution, and having at least one inlet attachment (46) for attachment to a water supply line (48) and at least one outlet attachment (50) for attachment to an outlet line (52, 92) for the solution formed from inflowing water and a part of the charge (8), wherein the charge (8) is situated in terms of flow between the inlet attachment (46) and the outlet attachment (50), wherein the container (14) is constructed as a transportable exchangeable unit sealed off from the outside in the non-attached state, **characterized in that** the inlet attachment (46) and the outlet attachment (50) are provided with attachment couplings which are self-locking in the non-attached state, which are unlatchable for or during attachment, **in that** the container (14) is disposed for an operating position such that the flow passes through the charge (8) substantially from bottom to top, **in that** this container is formed as a longitudinally extended cartridge (16) and the charge (8) is layered, as a standing column, over the entire diameter of the cartridge (16) through which flow passes, and **in that**, for retaining and receiving particulate dissolution residues and/or reaction products in the container (14) at least one filter means (28) is present.

2. Container as claimed in Claim 1, **characterized in that** the container is constructed so as to be refillable.

3. Container as claimed in Claim 2, **characterized in that** at least one unsealable and resealable refilling opening is provided.

4. Container as claimed in any one of the preceding claims, **characterized in that** this container is constructed in such a manner that a sedimentation velocity of the particulate solution residues and/or reaction products is higher than a through-flow velocity.

5. Container as claimed in any one of the preceding claims, **characterized in that** at least one feed line (32) is provided which passes through the charge (8) and opens out in the region of a bottom section (36) of the container (14).

6. Container as claimed in Claim 5, **characterized in that** the feed line (32) extends at least in sections along and/or in parallel to a longitudinal axis (38) of the container (14).

7. Container as claimed in any one of the preceding claims, **characterized in that** at least one distributor (40) for water is provided, which distributor is arranged downstream of the inlet attachment (46) in terms of flow and upstream of the charge (8) in terms of flow.

8. Container as claimed in Claim 7, **characterized in that** the distributor (40) is arranged on a bottom-side line end (34) of the feed line (32).

9. Container as claimed in any one of the preceding claims, **characterized in that** the charge (8) is a bulk material containing the hypochlorite compound and mixed with insoluble packing elements.

10. Container as claimed in any one of the preceding claims, **characterized by** at least one flow retarder (42) following the inlet attachment (46) and arranged upstream of the charge (8) in terms of flow.

11. Container as claimed in any one of the preceding claims, **characterized by** at least one flow retarder (44) following the charge (8) and arranged upstream of the outlet attachment (50) in terms of flow.

12. Container as claimed in Claim 10 or Claim 11, **characterized in that** the flow retarder (42, 44) is formed by a fine-grained bulk material layer.

13. Container as claimed in any one of the preceding claims, **characterized by** an unfilled sedimentation section (26) arranged downstream of the charge (8) and upstream of the outlet attachment (50) in terms of flow.

14. Container as claimed in any one of the preceding claims, **characterized in that** the at least one filter means (28) is arranged directly upstream of the outlet attachment (50) in terms of flow.

15. Container as claimed in any one of the preceding claims, **characterized in that** a water inlet and/or water outlet can be throttled to a desired through-flow rate.

16. Container as claimed in any one of the preceding claims, **characterized in that** this container is pressure-tight under conventional water line pressures, in particular is pressure-tight up to 16 bar.

17. Container as claimed in any one of the preceding claims, **characterized in that** it comprises a recording appliance, preferably a transmitter, for measuring a charge level.

18. Device for generating a chlorine-containing, aqueous disinfectant solution, comprising at least one container (14) according to any one of the preceding claims.

19. Device as claimed in Claim 18, **characterized in** addition by an installation appliance (6) in which the container (14) is received in such a manner that the water stream passes through the charge (8) at least in sections from bottom to top.

20. Device as claimed in Claim 19, **characterized in that** the installation appliance (6) comprises non-confusable attachments for the container (14).

21. Device as claimed in any one of Claims 18 to 20, **characterized in that** the container (14) is arranged between a dissolution water apparatus (4) provided upstream of the container (14) and an inoculation water apparatus (12) provided downstream which comprises at least one inoculation site (10) for adding the disinfectant solution to service water or drinking water.

22. Device as claimed in Claim 21, **characterized in that** the dissolution water apparatus (4) comprises at least one metering pump (54), connected to a dissolution water source (58), for feeding dissolution water to the container (14).

23. Device as claimed in either of Claims 21 and 22, **characterized in that** at least one nonreturn valve (62) blocking in the direction of the dissolution water apparatus (4) is arranged between the container (14) and the dissolution water apparatus (4).

24. Device as claimed in any one of Claims 21 to 23, **characterized in that** a relief valve (64) connected to a pressure sink (72) is provided between the container (14) and the at least one inoculation site (10).

25. Device as claimed in any one of Claims 21 to 24, **characterized in that** at least one solution container (90) for temporary storage of the chlorine-containing, aqueous disinfectant solution is provided between the container (14) and the at least one inoculation site (10).

26. Method for generating a chlorine-containing, aqueous disinfectant solution and treating an aqueous system (2), having the steps:
a) inserting at least one container (14) according to any one of Claims 1 to 17 into an installation appliance (6);
b) admixing the charge (8) of the container (14) with a dissolution water stream for generating the disinfectant solution; and
c) introducing the disinfectant solution into the aqueous system (2) that is to be treated.

27. Method according to Claim 26, **characterized in that** the container (14), after consumption of the charge (8), is taken out of the installation appliance (6) and fed to a recycling system (106).

28. Method as claimed in Claim 26 or 27, **characterized in that** a filling level of the charge (8) is monitored.

## Revendications

1. Récipient ( 14 ) ayant un remplissage ( 8 ) qui contient au moins un composé hypochlorite, notamment un composé hypochlorite de calcium, pour la production d'une solution aqueuse contenant du chlore, et ayant au moins un raccord ( 46 ) d'entrée pour le raccordement à un conduit ( 48 ) d' alimentation en eau et au moins un raccord ( 50 ) de sortie pour le raccordement à un conduit ( 52, 92 ) de sortie de la solution se formant à partir de l'eau affluente et d'une partie du remplissage ( 8 ), le remplissage ( 8 ) se trouvant du point de vue du courant entre le raccord ( 46 ) d'entrée et le raccord ( 50 ) de sortie, le récipient ( 14 ) étant constitué sous la forme d'une unité remplaçable, pouvant être transportée et qui est étanche vis-à-vis de l'extérieur à l'état non raccordé,
**caractérisé en ce que** le raccord ( 46 ) d'entrée et le raccord ( 50 ) de sortie sont munis de raccords d'accouplement auto-obturants à l'état non raccordé, qui peuvent être déverrouillés pour le raccordement, ou lors du raccordement **en ce que** le récipient ( 14 ) est conçu pour une position de fonctionnement telle que le remplissage ( 8 ) puisse être parcouru sensiblement de bas en haut, **en ce que** le récipient est conformé en une cartouche ( 16 ) s'étendant en longueur et le chargement ( 8 ) est inséré sous la forme d'une colonne fixe sur tout le diamètre parcouru de la cartouche ( 16 ), et **en ce qu'**il y a au moins un agent ( 28 ) filtrant pour la retenue et l'absorption de résidus particulaires de dissolution et/ou de produits de réaction dans le récipient ( 14 ).

2. Récipient suivant la revendication 1,
**caractérisé en ce que** le récipient est constitué de manière à pouvoir être rempli à nouveau.

3. Récipient suivant la revendication 2,
**caractérisé en ce qu'**il est prévu au moins une ouverture de remplissage à nouveau qui peut être ouverte et refermée.

4. Récipient suivant l'une des revendications précédentes, **caractérisé en ce qu'**il est constitué de manière à ce qu'une vitesse de sédimentation des résidus particulaires de solution et/ou des produits de réaction soit plus grande qu'une vitesse de passage du courant.

5. Récipient suivant l'une des revendications précédentes, **caractérisé en ce qu'**il est prévu au moins un conduit ( 32 ) d'apport traversant le remplissage ( 8 ) et débouchant dans la zone d'une partie ( 36 ) de fond du récipient ( 14 ).

6. Récipient suivant la revendication 5,
**caractérisé en ce que** le conduit ( 32 ) d'apport s'étend au moins par tronçon le long d'un axe ( 38 ) longitudinal du récipient ( 14 ) et/ou parallèlement à cet axe.

7. Récipient suivant l'une des revendications précédentes,
**caractérisé en ce qu'**il est prévu au moins un répartiteur ( 40 ) d'eau monté en aval du raccord ( 46 ) d'entrée et disposé en amont du remplissage ( 8 ).

8. Récipient suivant la revendication 7,
**caractérisé en ce que** le répartiteur ( 40 ) est disposé à une extrémité ( 34 ) du conduit ( 32 ) d'apport se trouvant du côté du fond.

9. Récipient suivant l'une des revendications précédentes, **caractérisé en ce que** le remplissage ( 8 ) est un produit en vrac mélangé à des corps de remplissage insolubles et contenant le composé hypochlorite.

10. Récipient suivant l'une des revendications précédentes, **caractérisé par** au moins un dispositif ( 42 ) de freinage du courant se raccordant au raccord ( 46 ) d'entrée et disposé en amont du remplissage ( 8 ).

11. Récipient suivant l'une des revendications précédentes, **caractérisé par** au moins un dispositif ( 44 ) de freinage du courant se raccordant au remplissage ( 8 ) est disposé en amont du raccord ( 50 ) de sortie.

12. Récipient suivant la revendication 10 ou la revendication 11, **caractérisé en ce que** le dispositif ( 42, 44 ) de freinage du courant est formé par une couche de produit en vrac en sable fin.

13. Récipient suivant l'une des revendications précédentes, **caractérisé par** une partie ( 26 ) de sédimentation non remplie, disposée en aval du remplissage ( 8 ) et disposée en amont du raccord ( 50 ) de sortie.

14. Récipient suivant l'une des revendications précédentes, **caractérisé en ce que** le au moins un agent ( 28 ) filtrant est disposé directement en amont du raccord ( 50 ) de sortie.

15. Récipient suivant l'une des revendications précédentes, **caractérisé en ce qu'**une entrée d'eau et/ou une sortie d'eau peut être étranglée jusqu'à un débit souhaité.

16. Récipient suivant l'une des revendications précédentes, **caractérisé en ce qu'**il est résistant à la pression aux pressions de conduites d'eau habituelles, en résistant à la pression notamment jusqu'à 16 bar.

17. Récipient suivant l'une des revendications précédentes, **caractérisé en ce qu'**il comporte un dispositif de détection, de préférence un indicateur, pour la mesure d'un niveau du remplissage.

18. Installation de production d'une solution de désinfection aqueuse et contenant du chlore, comprenant au moins un récipient ( 14 ) suivant l'une des revendications précédentes.

19. Installation suivant la revendication 18,
**caractérisée en outre par** un dispositif ( 6 ) d'érection dans lequel le récipient ( 14 ) peut être reçu de manière à ce que le remplissage ( 8 ) soit parcouru par le courant d'eau au moins par endroit de bas en haut.

20. Installation suivant la revendication 19,
**caractérisée en ce que**
le dispositif ( 6 ) d'érection comporte pour le récipient ( 14 ) des raccords ne pouvant pas être confondus.

21. Installation suivant l'une des revendications 18 à 20, **caractérisée en ce que** le récipient ( 14 ) est disposé entre un appareillage ( 4 ) d'eau de dissolution prévu en amont du récipient ( 14 ) et un appareillage d'eau d'inoculation prévu en aval, qui a au moins un point ( 10 ) d'inoculation pour l'injection de manière dosée de la solution de désinfection dans de l'eau industrielle ou dans de l'eau potable.

22. Installation suivant la revendication 21,
**caractérisée en ce que** l'appareillage ( 4 ) d'eau de dissolution comporte au moins une pompe ( 54 ) doseuse communiquant avec une source ( 58 ) d'eau de dissolution pour un apport d'eau de dissolution au récipient ( 14 ).

23. Installation suivant l'une des revendications 21 ou 22, **caractérisée en ce qu'**au moins un clapet anti-retour ( 62 ) obturant dans le sens de l'appareillage ( 4 ) d'eau de dissolution est monté entre le récipient ( 14 ) et l'appareillage ( 4 ) d'eau de dissolution.

24. Installation suivant l'une des revendications 21 à 23, **caractérisée en ce qu'**une soupape ( 64 ) de décharge reliée à un puits ( 72 ) de pression est prévue entre le récipient ( 14 ) et le au moins un point ( 10 ) d'inoculation.

25. Installation suivant l'une des revendications 21 à 24, **caractérisée en ce qu'**au moins un récipient ( 90 ) de solution, pour le stockage intermédiaire de la solution de désinfection aqueuse et contenant du chlore, est prévu entre le récipient ( 14 ) et le au moins un point ( 10 ) d'inoculation.

26. Procédé d'une préparation d'une solution de désinfection aqueuse et contenant du chlore et de traitement d'un système ( 2 ) aqueux, comprenant les stades :
a ) utilisation d'au moins un récipient ( 14 ) suivant l'une des revendications 1 à 17 dans un dispositif ( 6 ) d'érection,
b ) mélange du remplissage ( 8 ) du récipient ( 14 ) avec un courant d'eau de dissolution pour la production de la solution de désinfection ; et
c ) envoi de la solution de désinfection dans le système ( 2 ) aqueux à traiter.

27. Procédé suivant la revendication 26,
**caractérisé en ce que** l'on retire le récipient ( 14 ), après consommation du remplissage ( 8 ), du dispositif ( 6 ) d'érection et on l'envoie à un système ( 106 ) de revalorisation.

28. Procédé suivant la revendication 26 ou 27,
**caractérisé en ce que** l'on contrôle le niveau du remplissage ( 8 ).
